(19) Europäisches Patentamt
European Patent Office
Office européen des brevets

(11) EP 0 693 369 B1

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(51) Int Cl.$^7$: **B32B 27/18**, B32B 27/32

(21) Anmeldenummer: **95109720.3**

(22) Anmeldetag: **22.06.1995**

# (54) Siegelfähige orientierte Polyolefin-Mehrschichtfolie, Verfahren zu ihrer Herstellung und ihre Verwendung

Sealable oriented polyolefin multilayered film, process for making it and its use

Feuille polyoléfinique multicouche thermoscellable et orientée, procédé de fabrication et utilisation

(84) Benannte Vertragsstaaten:
**BE DE ES FR GB IT NL**

(30) Priorität: **23.07.1994 DE 4426185**

(43) Veröffentlichungstag der Anmeldung:
**24.01.1996 Patentblatt 1996/04**

(73) Patentinhaber: **Ticona GmbH**
**65451 Kelsterbach (DE)**

(72) Erfinder:
- **Peiffer, Herbert**
  **D-55126 Mainz (DE)**
- **Dries, Thomas**
  **D-55270 Schwabenheim (DE)**
- **Murschall, Ursula**
  **D-55283 Nierstein (DE)**
- **Schreck, Michael**
  **D-60529 Frankfurt (DE)**

(56) Entgegenhaltungen:
**EP-A- 0 242 055** **EP-A- 0 430 472**
**EP-A- 0 447 652** **EP-A- 0 454 420**
**DE-A- 3 834 622** **US-A- 4 118 438**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 693 369 B1

## Beschreibung

Die Erfindung betrifft eine orientierte Polyolefin-Mehrschichtfolie, umfassend eine polyolefinische Basisschicht und mindestens eine siegelfähige Deckschicht. Die Folien zeichnen sich durch eine niedrige Trübung, einen hohen Glanz und einen niedrigen Reibungskoeffizienten aus.

Im Stand der Technik sind transparente Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Die DE-A-20 01 032 beschreibt Folien aus verschiedenen thermoplastischen Kunststoffen, deren Gleiteigenschaften durch Zusatz von Carbonsäureamiden und Antiblockmitteln verbessert sind. Da in die Deckschichten alleine keine ausreichende Menge an Gleitmittel eingearbeitet werden kann, wird die zusätzliche Einarbeitung der Amide in die Basisschicht empfohlen. Diese Folien haben einen Reibungskoeffizienten im Bereich von 0,4 bis 0,8 und entsprechen damit nicht mehr den heutigen Qualitätsanforderungen.

Die US-A-4,117,193 beschreibt mehrschichtige Folien aus einer Polypropylen-Basisschicht, welche ein Gleitmittel und ein Antiblockmittel und ein Antistatikmittei enthält. Die Deckschicht dieser Folien besteht aus einem Polymerblend und enthält zusätzlich ein Gleitmittel und ein Antiblockmittel. Das Polymerblend besteht aus einem Ethylen-Butylen-Copolymer und einem polyolefinischen Harz wie HDPE oder LDPE. Es ist beschrieben, daß die mangelhaften Gleiteigenschaften der Folien durch den Zusatz von Gleit- und Antiblockmitteln alleine nicht genügend verbessert werden können. Aus diesem Grund wird die Deckschicht durch Zusatz von HDPE oder LDPE in Kombination mit einem Gleit- und Antiblockmittel modifiziert. Die Reduktion des Reibungskoeffizienten ist nach den Beispielen und Vergleichsbeispielen wesentlich auf den Zusatz von HDPE zurückzuführen. Reine Copolymer-Deckschichten mit gleicher Additivzusammensetzung weisen Reibungskoeffizienten von 0,7 bis 0,8 auf. Die Folien kombinieren hervorragende Reibungskoeffizienten mit einer guten Bedruckbarkeit. Sie sind jedoch durch den Zusatz des reibungsvermindernden polyolefinischen Harzes in der Trübung und im Glanz stark verbesserungsbedürftig.

Die EP-A-0 402 100 beschreibt Polypropylenfolien, die 0,01 bis 0,5 Gew.-% eines sphärischen $SiO_2$ und 0,3 bis 5 Gew.-% eines Hydroxy-Fettsäure-Glycerids enthalten. Diese Erfindung betrifft einschichtige und mehrschichtige Folien. Mehrschichtige Ausführungsformen weisen sowohl in der Deckschicht als auch in der Basisschicht die Kombination von $SiO_2$ und Glycerid auf. Es ist beschrieben, daß die ausgewählten Mengen an $SiO_2$ und Glycerid wesentlich für die vorteilhaften Eigenschaften der Folien sind und Abweichungen von diesen Bereichen nicht mehr zu dem gewünschten Ergebnis führen. Die Folien zeichnen sich durch eine gute Transparenz, Gleitfähigkeit und Metallhaftung aus. Sie zeigen jedoch nach längerer Lagerzeit einen Belag auf der Oberfläche, der das Aussehen der Folien beeinträchtigt. Dieser Effekt ist auch als "blooming" bekannt und wird durch die Migration bestimmter Additive, insbesondere der Glyceride, an die Oberfläche der Folien verursacht.

Die EP-A-0 182 463 beschreibt eine mehrschichtige Folie, welche 0,05 bis 0,2 Gew.-% tertiäres aliphatisches Amin in der Basisschicht und eine Kombination von Siliconöl und $SiO_2$ in der siegelfähigen Deckschicht enthält. Nach der Beschreibung erhält man durch das überraschende Zusammenwirken von $SiO_2$, Siliconöl und Amin in Verbindung mit einer ausgewählten Deckschichtdicke von kleiner als 0,8 μm Folien mit Reibungskoeffizienten von 0,3 und kleiner. Trotz dieses hervorragenden Reibungskoeffizienten sind die Verarbeitungseigenschaften der Folie mangelhaft. Sie ist insbesondere nicht bedruckbar und daher für viele Anwendungen nicht geeignet.

Die EP-A-0 143 130 offenbart Folien, die ein Carbonsäureamid in der Basisschicht und ebenfalls die Kombination von Siliconöl und $SiO_2$ in der Deckschicht enthalten. Ähnlich wie in der oben erwähnten EP-A-0 182 463 wird eine synergistische Wirkung der drei ausgewählten Komponenten auf den Reibungskoeffizienten beschrieben. Auch diese Folien sind trotz ihrer vorteilhaften Gleitfähigkeit mangelhaft in der Verarbeitung. Auch ihnen fehlt die wichtige Eigenschaft Bedruckbarkeit.

Die EP-A-0 242 055 beschreibt die Verwendung eines nicht schmelzbaren, Organosiloxanharzpulvers mit einer dreidimensionalen Netzstruktur als Antiblockmittel in Folien. Sowohl das Siliconharz als auch das Propylenpolymer werden in Form eines Pulvers eingesetzt, welches aus Teilchen mit einer nahezu kugelförmigen Gestalt besteht, wobei diese Teilchenform durch eine entsprechende Gleichung für den tatsächlichen sphärischen Grad charakterisiert wird. Die Folien sollen gegenüber dem Stand der Technik bezüglich ihrer Transparenz, Antiblockeigenschaften, Gleitfähigkeit und bezüglich ihres Aussehens verbessert sein. Die Propylen-Antiblockmittel-Mischung kann auch als Deckschichtmaterial für coextrudierte Mehrschichtfolien eingesetzt werden. Diese coextrudierten Mehrschichtfolien sind jedoch bezüglich ihrer Transparenz und in ihren Glanzwerten noch verbesserungsbedürftig, insbesondere wenn die Deckschichten in üblichen Schichtdicken von über 0,5 μm aufgebracht werden. Darüber hinaus ist dieses Antiblockmittel sehr viel teurer als herkömmliche Antiblockmittel.

Die deutsche Offenlegungsschrift DE-A-4 306 154 beschreibt die Verwendung eines organisch beschichteten $SiO_2$ als Antiblockmittel in siegelfähigen Folien. Der Reibungskoeffizient und das Verarbeitungsverhalten der Folie sind

verbessert. Diese Schrift macht keine Aussage über die räumliche Form der Antiblockteilchen.

Die EP-A-0 353 368 beschreibt die Verwendung des in der EP-A-0 242 055 beschriebenen Siloxanharzpulvers in Verbindung mit einem Hydroxyfettsäureglycerids. Diese Folien eignen sich besonders gut für Vakuumbedampfungen, sind jedoch bezüglich Glanz und Transparenz sehr mangelhaft.

Aus den EP-A-0 430 472, US-A-4,118,438, EP-A-0 454 420 und EP-A-0 447 652 sind Folien bekannt, die Antiblockiermittel in Form von sphärischen Teilen enthalten. Die in diesen Schriften offenbarten Antiblockiermittel gehören unterschiedlichsten chemischen Stoffklassen an, beispielsweise Polyamiden, Polyestern, Polyethern, Polyacrylaten oder Organosiloxanharzen.

Aus der DE-A-38 34 622 sind Formmassen bekannt, die zur Herstellung von Folien eingesetzt werden können. Die Formmassen bestehen aus Polypropylenpolymerisat und einem hydrierten Harz als Antiblockiermittel. Das hydrierte Harz leitet sich von Cyclopentadienen ab.

In Anwendung der bekannten Lehren hat sich gezeigt, daß bekannte Antiblockmittel teilweise nachteilige Auswirkungen auf bestimmte Folieneigenschaften haben. Durch das Antiblockmittel werden die Transparenz und der Glanz der Folie beeinträchtigt. Die Verbesserung der Reibung geht im allgemeinen mit einer Erhöhung der Oberflächenrauhigkeit einher. $SiO_2$ als Antiblockmittel führt bei der Herstellung der Folien zu Ablagerungen an der Düsenlippe und zu Abrieb auf den Walzen. Dadurch müssen die Düsenlippe und die Walzen häufig gereinigt werden, da die Folie sonst während der Produktion schlecht läuft und die Ablagerungen an der Düsenlippe zu einer Streifenbildung auf der Folie führen. Zusätzlich treten Probleme bei der Coronabehandlung auf. An den mit $SiO_2$-Abrieb behafteten Stellen der Walze schlägt die Coronabehandlung durch und führt zum sogenannten unerwünschten Rückseiteneffekt, wodurch beim Weiterverarbeiten der Folie wie z. B. Bedrucken oder Metallisieren reklamationsfähige Fehlstellen auftreten.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sich durch eine Kombination der folgenden Eigenschaften auszeichnet:

- einen hohen Glanz
- eine niedrige Trübung
- ein niedriger Reibungskoeffizient
- eine niedrige Oberflächenrauhigkeit

Die der Erfindung zugrundeliegende Aufgabe wird gelöst durch eine Mehrschichtfolie der eingangs genannten Gattung, deren kennzeichnendes Merkmal darin besteht, daß die siegelfähige Deckschicht mindestens ein amorphes Cycloolefin polymer enthält, welches in der Deckschicht in Form von separierten Teilchen vorliegt, und welches ein Moleknlargewicht im Bereich von 2.000 bis 180.000 aufweist.

Die Basisschicht der erfindungsgemäßen Mehrschichtfolie enthält im wesentlichen ein Polyolefin, vorzugsweise ein Propylenpolymer, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, des Propylenpolymeren.

Das Propylenpolymere enthält 90 bis 100 Gew.-%, vorzugsweise 95 bis 100 Gew.-%, insbesondere 98 bis 100 Gew.-%, Propylen und besitzt einen Schmelzpunkt von 120 °C oder höher, vorzugsweise 150 bis 170 °C und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und/oder anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Im allgemeinen kann die Basisschicht Gleitmittel, Antistatika, Stabilisatoren und/oder Neutralisationsmittel in jeweils wirksamen Mengen sowie gegebenenfalls Kohlenwasserstoffharz enthalten.

In einer weißen oder opaken bzw. weiß/opaken Ausführungsform enthält die Basisschicht zusätzlich Pigmente oder vakuoleniniziierende Teilchen bzw. eine Kombination aus diesen.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen

an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm. Die Basisschicht enthält Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Opake Ausführungsformen der Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen Vakuole/-Polymermatrix entsteht. Im allgemeinen beträgt der mittlere Teilchendurchmesser der vakuoleniniziierenden Teilchen 1 bis 6 µm, vorzugsweise 1,5 bis 5 µm. Die Basisschicht enthält vakuoleniniziierende Teilchen im allgemeinen in einer Menge von 1 bis 25 Gew.-%.

Übliche vakuoleniniziierende Teilchen der Basisschicht sind anorganische und/-oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylen- oder Polyethylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Weiß/opake Folien, welche mit vakuoleniniziierenden Teilchen und mit Pigment ausgerüstet sind, enthalten die vakuoleniniziierenden Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%.

Die Dichte der opaken bzw. weißen Folien kann innerhalb weiter Grenzen variieren und hängt von der Art und der Menge der Füllstoffe ab. Die Dichte liegt im allgemeinen im Bereich von 0,4 bis 1,1 $g/cm^3$. Pigmentierte Folien haben eine Dichte in der Größenordnung von 0,9 $g/cm^3$ oder darüber, vorzugsweise im Bereich von 0,9 bis 1,1 $g/cm^3$. Folien, welche nur vakuoleniniziierende Teilchen enthalten, haben eine Dichte von kleiner 0,9 $g/cm^3$. Für Verpackungsfolien mit einem Gehalt an vakuoleniniziierenden Teilchen von 2 bis 5 Gew.-% liegt die Dichte im Bereich von 0,6 bis 0,85 $g/cm^3$. Für Folien mit einem Gehalt an vakuoleniniziierenden Teilchen von 5 bis 14 Gew.-% liegt die Dichte im Bereich von 0,4 bis 0,8 $g/cm^3$. Folien, welche Pigmente und vakuoleniniziierende Teilchen enthalten, haben eine Dichte im Bereich von 0,5 bis 0,85 $g/cm^3$, je nach Verhältnis von Pigmentgehalt zu Gehalt an vakuoleniniziierenden Teilchen.

Die erfindungsgemäße Mehrschichtfolie kann gegebenenfalls (eine) weitere zwischen der Basis- und der Deckschicht aufgebrachte Zwischenschicht/en umfassen. Diese gegebenenfalls vorhandene/n Zwischenschicht/en enthält/enthalten im wesentlichen Propylenpolymere oder Polypropylenmischungen, wie sie vorstehend für die Basisschicht beschrieben wurden. Grundsätzlich können die Basisschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll. Gegebenenfalls können den Zwischenschichten Additive in jeweils wirksamen Mengen zugesetzt werden.

In einer bevorzugten Ausführungsform der erfindungsgemäßen Folie wird das Propylenpolymere der Basisschicht und/oder der Zwischenschicht peroxidisch abgebaut.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids

$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Polyolefinfolie umfaßt weiterhin mindestens eine siegelfähige Deckschicht. Diese Deckschicht enthält im wesentlichen siegelfähige Polymere aus α-Olefinen mit 2 bis 10 Kohlenstoffatomen und amorphes cycloolefin polymer in Form von separierten Teilchen sowie gegebenenfalls weitere Additive in jeweils wirksamen Mengen. Im allgemeinen enthält die Deckschicht 75 bis nahezu 100 Gew.-%, insbesondere 90 bis 99,5 Gew.-%, des siegelfähigen α-olefinischen Polymers.

Beispiele für derartige α-olefinische Polymere sind

ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,
wobei insbesondere statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%
und einem Butylen-1-Gehalt von 10 bis 40 Gew.-%,
jeweils bezogen auf das Gesamtgewicht des Polymerblends, bevorzugt sind.

Die vorstehend beschriebenen Copolymeren weisen im allgemeinen einen Schmelzflußindex von 1,5 bis 30 g/10 min, vorzugsweise von 3 bis 15 g/10 min, und einen Schmelzpunkt im Bereich von 120 bis 140 °C auf. Die Terpolymeren haben im allgemeinen einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat im allgemeinen einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Erfindungsgemäß enthält die Deckschicht der Folie mindestens ein amorphes cycloolefin polymer in Form von separierten Teilchen im allgemeinen in einer Menge von maximal 5 Gew.-%, vorzugsweise 0,001 bis 3 Gew.-%, insbesondere 0,01 bis 2 Gew.-%, bezogen auf das Gewicht der Deckschicht. Es wurde gefunden, daß das amorphe cycloolefin polymere, welches an sich ein polymerer Feststoff ist und als Rohstoff keinen Teilchencharakter hat, in der Deckschicht überraschenderweise in Form von separierten Teilchen vorliegt.

Unter amorphen cycloolefin polymeren werden im Sinne der vorliegenden Erfindung solche Polymeren verstanden, welche trotz einer regellosen Anordnung der Molekülketten bei Raumtemperatur Feststoffe sind. Sie sind im wesentlichen nicht kristallin, und ihr Kristallinitätsgrad liegt im allgemeinen unter 5 %, vorzugsweise unter 2 %, oder beträgt 0 %. Besonders geeignet sind amorphe cycloolefin polymere, deren Glastemperatur $T_G$ im Bereich von 70 bis 300 °C, vorzugsweise 80 bis 250 °C, insbesondere 100 bis 200 °C, liegt oder deren Vicat-Erweichungstemperatur $T_v$ (VST/B/120) zwischen 70 und 200 °C, vorzugsweise zwischen 80 und 180 °C, liegt. Das amorphe cycloolefin polymere hat ein mittleres Molekulargewicht $M_w$ im Bereich von 2 000 bis 180 000, insbesondere 3 000 bis 150 000.

Der Brechungsindex des amorphen cycloolefin polymeren liegt im allgemeinen im Bereich von 1,3 bis 1,7, vorzugsweise 1,4 bis 1,6. Dabei ist es besonders vorteilhaft, wenn der Brechungsindex des amorphen cycloolefin polymeren in einem bestimmten Verhältnis zum Brechungsindex des Polyolefins der Deckschicht steht. Im allgemeinen unterscheiden sich die Brechungsindices von amorphem cycloolefin polymer und dem Polyolefin der Deckschicht maximal um 0,1 Einheiten, vorzugsweise um maximal 0,05 Einheiten.

Das amorphe cycloolefin polymere liegt in der hergestellten Folie überraschenderweise in Form von separierten Teilchen vor, welche in Durchlichtaufnahmen der Folienoberfläche deutlich zu erkennen sind. Die Teilchengröße der in der Deckschicht vorliegenden Teilchen liegt im Bereich von 0,2 bis 20 µm, vorzugsweise 0,5 bis 1,5 µm.

Es hat sich herausgestellt, daß die Teilchen aus amorphem cycloolefin polymer im allgemeinen annähernd kugelförmig sind. Annähernd kugelförmige Teilchen umfassen im Sinne der vorliegenden Erfindung Teilchen, die der folgenden Bedingung genügen:

$$f = \sqrt{A/(\pi/4)}/D_{max}$$

worin f größer 0,5, vorzugsweise 0,7 bis 1, ist und A die Querschnittsfläche in $mm^2$ und $D_{max}$ den maximalen Durchmesser in mm der Querschnittsfläche bedeuten. Der Faktor f ist Maß für den Grad der Kugelform der Teilchen. Je näher der Wert für f bei 1 liegt, desto näher kommt die Form der Teilchen der idealen Kugelform.

Als amorphe cycloolefin polymere mit dem zuvor beschriebenen Eigenschaftsbild kommen eine Vielzahl von in der Regel transparenten Polymeren in Frage. Beispiele hierfür sind amorphe Homo- und Copolymere von polycyclischen Olefinen (je nach Zusammensetzung und Molekulargewicht $T_G$ = 70 bis 300 ° C). Geeignete Cycloolefincopolymere sind an sich bekannt und in EP-A-0 407 870, EP-A-0 485 893, EP-A-0 503 422 und DE-A-40 36 264 beschrieben.

Die eingesetzten Cycloolefinpolymeren sind aus einem oder mehreren Cycloolefinen aufgebaut, wobei als Cycloolefine im allgemeinen substituierte und unsubstituierte Cycloalkene und/oder Polycycloalkene wie beispielsweise Bi-, Tri- oder Tetracycloalkene eingesetzt werden. Die Cycloolefinpolymeren können auch verzweigt sein. Derartige Produkte können Kamm- oder Sternstruktur aufweisen.

Besonders bevorzugt sind Cycloolefincopolymere, die mindestens ein polycyclisches Olefin der folgenden Formeln I bis VI enthalten:

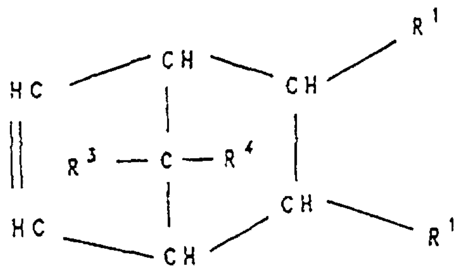

(I),

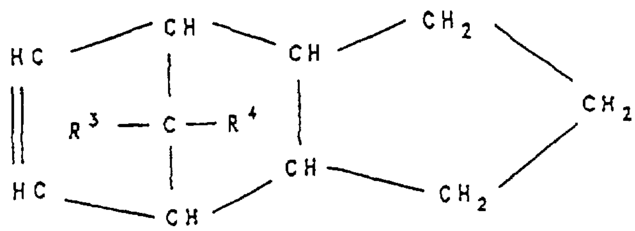

(II),

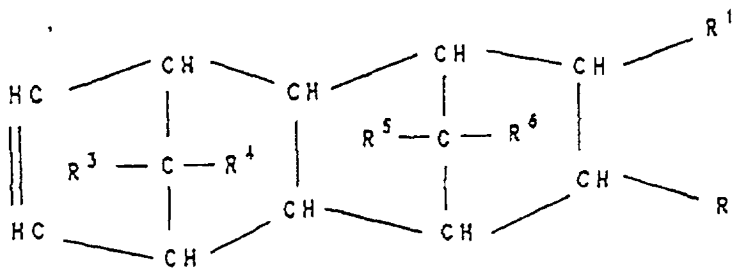

(III),

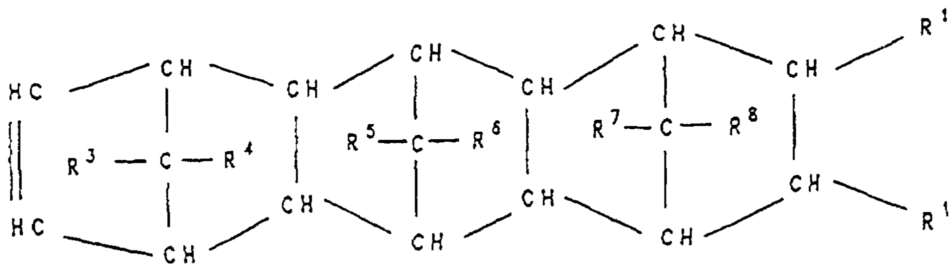

(IY),

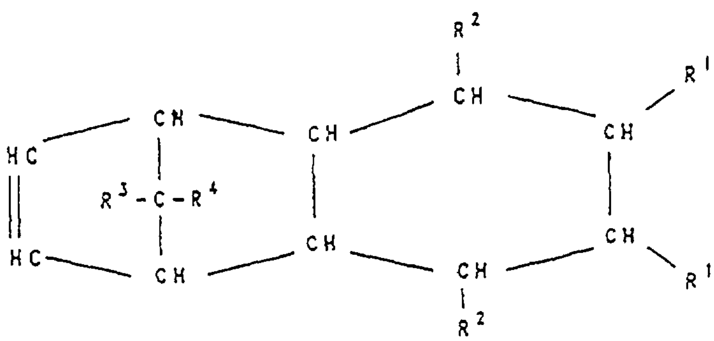

(Y),

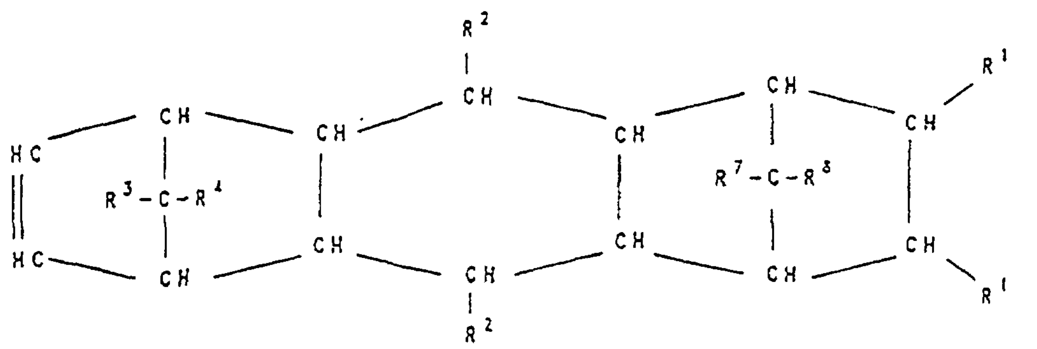

(VI),

Die Reste $R^1$ bis $R^8$ der Formeln I bis VI können gleich oder verschieden sein und H, $C_6$-$C_{20}$-Aryl, $C_1$-$C_{20}$-Alkyl, F, Cl, Br, J bedeuten.

Die Herstellung der Cycloolefinpolymeren erfolgt vorzugsweise mit Hilfe von Übergangsmetallkatalysatoren, die in den vorstehend genannten Schriften beschrieben sind. Darunter sind die Herstellverfahren gemäß EP-A-0 407 870 und EP-A-0 485 893 bevorzugt, da diese Verfahren Cycloolefinpolymere mit einer engen Molekulargewichtsverteilung ($M_w/M_n$ = 2) liefern. Dadurch werden die Nachteile wie Migration, Extrahierbarkeit oder Klebrigkeit der bzw. durch die niedermolekularen Bestandteile vermieden.

Ein besonders gutes Eigenschaftsbild wird mit Cycloolefinpolymeren erzielt, die ein mittleres bis höheres Molekulargewicht im Bereich von 2 000 bis 180 000, insbesondere 3 000 bis 150 000, haben. Die Regulierung des Molekulargewichts erfolgt bei der Herstellung durch den Einsatz von Wasserstoff, eine gezielte Auswahl des Katalysators und der Reaktionsbedingungen.

Die erfindungsgemäße Mehrschichtfolie umfaßt die vorstehend beschriebene Basisschicht und mindestens eine Deckschicht sowie gegebenenfalls weitere Schichten. Bevorzugt sind dreischichtige Ausführungsformen, welche auf beiden Seiten der Basisschicht eine Deckschicht aufweisen, welche bezüglich ihrer Dicke und Zusammensetzung gleich oder verschieden sein können. Daneben sind fünfschichtige Ausführungsformen bevorzugt, welche eine Basisschicht und auf beiden Seiten der Basisschicht aufgebrachte Zwischenschichten und beidseitige Deckschichten aufweisen.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 µm, insbesondere 10 bis 50 µm, wobei die Basisschicht etwa 50 bis 90 % der Gesamtfoliendicke ausmacht.

Die Dicke der Deckschicht/en ist größer als 0,2 µm und liegt vorzugsweise im Bereich von 0,3 bis 2 µm, insbesondere größer als 0,5 bis 1 µm, wobei beidseitige Deckschichten gleich oder verschieden dick sein können.

Die Dicke der gegebenenfalls vorhandenen Zwischenschicht/en beträgt jeweils unabhängig voneinander 1 bis 12 µm, wobei Zwischenschichtdicken von 2 bis 8 µm, insbesondere 3 bis 6 µm, bevorzugt sind. Die angegebenen Werte beziehen sich jeweils auf eine Zwischenschicht.

Neben diesem ausgewählten Deckschichtadditiv kann die erfindungsgemäße Mehrschichtfolie in einer oder mehreren Schichten zusätzlich Neutralisationsmittel, Stabilisatoren, Gleitmittel, Kohlenwasserstoffharze und/oder Antistatika enthalten. Die nachstehenden Angaben in Gewichtsprozent beziehen sich auf das Gewicht der jeweiligen Schicht, der das Additiv zugesetzt ist.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2$/g. im allgemeinen wird das Neutralisationsmittel in einer Menge von 0,02 bis 0,1 Gew.-% zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als500 g/molbevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Kohlenwasserstoffharze sind niedermolekulare Polymere, deren Molekulargewicht im allgemeinen in einem

Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Die Kohlenwasserstoffharze werden bevorzugt der Basisschicht und/oder der/den Zwischenschicht/en zugesetzt. Die wirksame Menge an niedrigmolekularem Harz beträgt 1 bis 20 Gew.-%, vorzugsweise 2 bis 10 Gew.-%, bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharz), Styrolharze, Cyclopentadienharze und Terpenharze (diese Harze sind in Ullmanns Encyklopädie der technischen Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder via Masterbatch-Technik zugegeben werden. Die den einzelnen Schichten der Folie entsprechenden Schmelzen werden dann gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 20 bis 90 °C zu halten.

Die Temperaturen, bei denen Längs- und Querstreckung durchgeführt werden, können variieren. Im allgemeinen wird die Längsstreckung vorzugsweise bei 100 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die amorphen cycloolefin polymeren werden entweder als reines Granulat oder als granuliertes Konzentrat (Masterbatch) in die Deckschicht bzw. Deckschichten der Folie eingearbeitet, indem das Polyolefingranulat oder -pulver der Deckschicht/en mit dem amorphen cycloolefin polymeren vorgemischt und anschließend dem Extruder zugeführt wird. Im Extruder werden die Komponenten weiter vermischt und auf Verarbeitungstemperatur erwärmt. Es wurde

gefunden, daß die Gleiteigenschaften und die Optik der Folie auch von den Extrusionsbedingungen (Temperatur, Scherung) abhängen. Überraschenderweise lassen sich unter sonst gleichen Bedingungen bezüglich Rohstoffen und Streckverfahren die Gleiteigenschaften und die Optik der Folie über die Bedingungen im Extruder variieren. Dabei ist es für das erfindungsgemäße Verfahren zur Herstellung der Folie wesentlich, daß die Extrusionstemperatur für die Deckschicht/en oberhalb der Glastemperatur/Vicat-Erweichungstemperatur des amorphen cycloolefin polymeren liegt. Im allgemeinen liegt die Extrusionstemperatur für die Deckschicht/en mindestens 10 °C, vorzugsweise 15 bis 180 °C, insbesondere 20 bis 150 °C, über der $T_G$ bzw. der $T_V$ des amorphen Polymeren.

Es wird vermutet, daß sich das amorphe cycloolefin polymere bei den für die Folienherstellung üblichen Extrusionsbedingungen verflüssigt und dann während der Extrusion überraschenderweise je nach Viskosität des Polyolefins der Deckschicht und der Viskosität des amorphen cycloolefin polymeren bei der gewählten Extrusionstemperatur in mehr oder weniger große partikelartige Teilchen überraschenderweise separiert und nicht agglomeriert. Dadurch liegt das amorphe cycloolefin polymere, welches einfach als Feststoff zugegeben wird, nach der Extrusion und Orientierung in der Deckschicht der Folie in Form von separierten Teilchen vor, welche als Antiblockmittel wirken.

Die erfindungsgemäße Folie ist gegenüber bekannten Folien mit niedrigem Reibungskoeffizienten in ihrem Glanz und in ihrer Trübung verbessert und zeichnet sich ebenfalls durch einen niedrigen Reibungskoeffizienten und durch eine niedrige Oberflächenrauhigkeit aus. Der Gleitreibungskoeffizient von gleitmittelfreien Ausführungsformen der erfindungsgemäßen Folien liegt im allgemeinen im Bereich von 0,3 bis 0,7, vorzugsweise 0,3 bis 0,5. Folien, welche zusätzlich ein Gleitmittel wie z. B. Fettsäureamid, insbesondere Erucasäureamid, enthalten, haben einen noch weiter erniedrigten Gleitreibungskoeffizienten. Dieser liegt bei der erfindungsgemäßen Folie mit Erucasäureamid in der Basisschicht im allgemeinen im Bereich von 0,05 bis 0,3, vorzugsweise 0,1 bis 0,2. Der Glanz der erfindungsgemäßen Folie liegt im Bereich von 90 bis 130, vorzugsweise 105 bis 130. Die Trübung der transparenten Ausführungsformen liegt im Bereich von 0,9 bis 3,0, vorzugsweise im Bereich von 0,9 bis 2,0.

Die Erfindung wird nun anhand von Ausführungsbeispielen noch näher erläutert.

**Beispiel 1**

Es wurde durch Coextrusion und anschließende stufenweise Orientierung in Längs- und Querrichtung eine dreischichtige Folie mit einer Gesamtdicke von 20 µm und einem ABA-Schichtaufbau hergestellt, d. h. die Basisschicht B war von zwei gleichen Deckschichten A umgeben.

Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (® Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (® Armostat 300).

Die polyolefinischen Deckschichten bestanden im wesentlichen aus einem Ethylen-Propylen-Buten-1-Terpolymeren mit einem Gehalt von 3,5 Gew.-% Ethylen, 88,5 Gew.-% Propylen und 8 Gew.-% Buten-1. Die Deckschichten enthielten 0,05 Gew.-% eines cyclischen Olefincopolymeren mit einer $T_G$ von 174 °C und mit einem mittleren Molekulargewicht von 34 000. Die Dicke der Deckschichten betrug jeweils 0,8 µm.

**Beispiel 2**

Beispiel 1 wurde wiederholt. Die Deckschicht enthielt jedoch 0,15 Gew.-% des gleichen Cycloolefincopolymers.

**Vergleichsbeispiel 1**

Beispiel 1 wurde wiederholt. Als Antiblockmittel wurden jedoch 0,15 Gew.-% eines vernetzten Siliconharzpulvers mit einem mittleren Teilchendurchmesser von 2 µm (® Tospearl 20 der Firma Toshiba Silicone Co., Ltd.) eingesetzt.

**Vergleichsbeispiel 2**

Beispiel 1 wurde wiederholt Als Antiblockmittel wurden jedoch 0,15 Gew.-% eines organisch gecoateten Siliciumdioxids mit einem mittleren Teilchendurchmesser von 2 µm (® Sylobloc 44 der Firma Grace) eingesetzt.

**Vergleichsbeispiel 3**

Vergleichsbeispiel 1 wurde wiederholt. Die Deckschicht enthielt jedoch 0,33 Gew.-% des Siliconharzpulvers.

**Vergleichsbeispiel 4**

Vergleichsbeispiel 2 wurde wiederholt. Die Deckschicht enthielt jedoch 0,33 Gew.-% des gecoateten Siliciumdioxids.

Die Eigenschaften der Folien gemäß den Beispielen und Vergleichsbeispielen sind in der nachstehenden Tabelle zusammengefaßt.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Bestimmung der Siegelanspringtemperatur

Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 $N/cm^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 1,5 $N/mm^2$ (Gerät: Brugger Typ NDS, einseitig beheizte Siegelbacke) versiegelt. Die Siegelnahtfestigkeit wurde nach der T-Peel-Methode bestimmt.

Reibung

Die Reibung wurde in Anlehnung an DIN 53 375 bestimmt. Die Gleitreibungszahl wurde 14 Tage nach der Produktion gemessen.

Oberflächenspannung

Die Oberflächenspannung wurde mittels der sogenannten Tintenmethode (DIN 53 364) bestimmt.

Rauhigkeit

Die Rauhigkeit wurde nach DIN 4768 bei einem Cut-off von 0,25 mm bestimmt.

Trübung

Die Trübung der Folie wurde nach ASTM-D 1003-52 gemessen. Die Trübungsmessung nach Holz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

## TABELLE

| | Glanz | | Trübung | | Siegelanspringtemperatur MST [°C] 10 N/cm²; 0,5 s | | Gleitreibungszahl | Rauhigkeit | |
|---|---|---|---|---|---|---|---|---|---|
| | Meßwinkel 20° | Meßwinkel 60° | Hölz 4lagig | ASTM-D 1003 1lagig | A ./. A | B ./. B | A ./. B | A ./. A | B ./. B |
| B1 | 120 | 145 | 22 | 1,4 | 112 | 118 | 0,18 | 0,65 | 0,51 |
| B2 | 115 | 140 | 25 | 1,8 | 114 | 120 | 0,17 | 0,70 | 0,78 |
| VB1 | 108 | 135 | 39 | 3,9 | 116 | 120 | 0,17 | 0,55 | 0,58 |
| VB2 | 105 | 135 | 35 | 3,5 | 112 | 118 | 0,32 | 1,1 | 1,23 |
| VB3 | 102 | 133 | 43 | 4,2 | 116 | 120 | 0,17 | 0,60 | 0,77 |
| VB4 | 102 | 128 | 41 | 3,7 | 116 | 120 | 0,3 | 1,3 | 1,45 |

B = Beispiel
VB = Vergleichsbeispiel
A = Walzenseite
B = Luftseite

## Patentansprüche

1. Orientierte Polyolefin-Mehrschichtfolie, umfassend eine polyolefinische Basisschicht und mindestens eine siegelfahige Deckschicht enthaltend im wesentlichen siegelföhige Polymere aus $\alpha$-Olefinen mit 2-10 Kohlenstoffatomen **dadurch gekennzeichnet, daß** die siegelfähige Deckschicht mindestens ein amorphes cycloolefin polymer enthält, welches in der Deckschicht in Form von separierten Teilchen vorliegt, und welches ein Molekulargewicht im Bereich von 2.000 bis 180.000 aufweist

2. Polyolefinfolie nach Anspruch 1, **dadurch gekennzeichnet, daß** die Deckschicht maximal 5 Gew.-%, vorzugsweise 0,001 bis 3 Gew.-%, amorphes cycloolefin polymer, bezogen auf das Gewicht der Deckschicht, enthält.

3. Polyolefin-Mehrschichtfolie nach Anspruch 1 und/oder 2, **dadurch gekennzeichnet, daß** die separierten Teilchen aus amorphem cycloolefin polymer einen mittleren Teilchendurchmesser von 0,2 bis 20 µm, vorzugsweise 0,5 bis 15 µm, aufweisen.

4. Polyolefinfolie nach einem oder mehreren der Ansprüche 1 bis 3, **dadurch gekennzeichnet, daß** das amorphe cycloolefin polymere eine Glastemperatur $T_G$ im Bereich von 70 bis 300 °C oder eine Vicat-Erweichungstemperatur $T_V$ von 70 bis 200 °C hat.

5. Polyolefinfolie nach einem oder mehreren der Ansprüche 1 bis 4, **dadurch gekennzeichnet, daß** das amorphe cycloolefin polymere einen Kristallinitätsgrad von unter 5 % und ein mittleres Molekulargewicht $M_w$ von 3.000 bis 150 000 hat.

6. Polyolefinfolie nach einem oder mehreren der Ansprüche 1 bis 5, **dadurch gekennzeichnet, daß** das amorphe cycloolefin polymere einen Brechungsindex von 1,3 bis 1,7 hat und dieser Brechungsindex um maximal 0,1 Einheiten größer oder kleiner als der Brechungsindex des Polyolefins ist.

7. Polyolefinfolie nach einem oder mehreren der Ansprüche 1 bis 6, **dadurch gekennzeichnet, daß** das amorphe Cycloolefinpolymere abgeleitet ist von mindestens einem polycyclischen Olefin der Formeln I bis VI

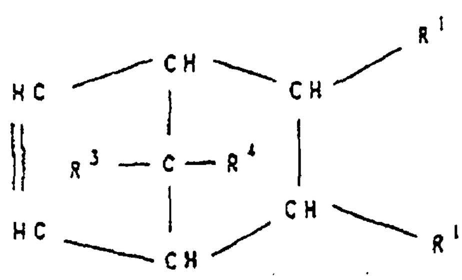

(I),

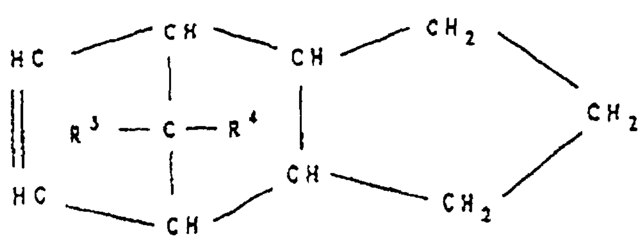

(II),

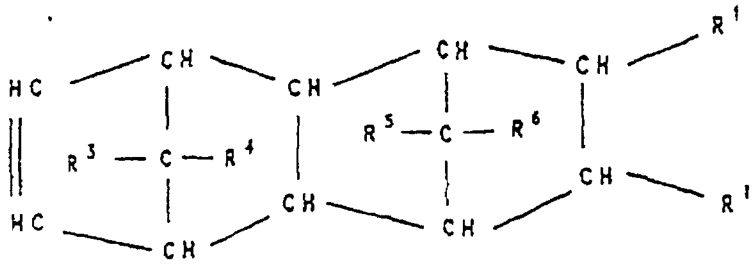

(III),

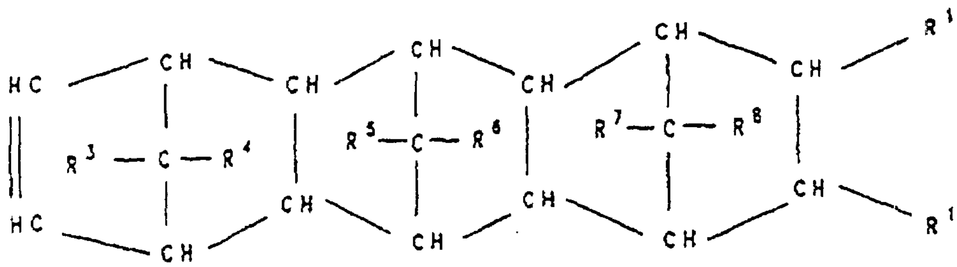

(IV),

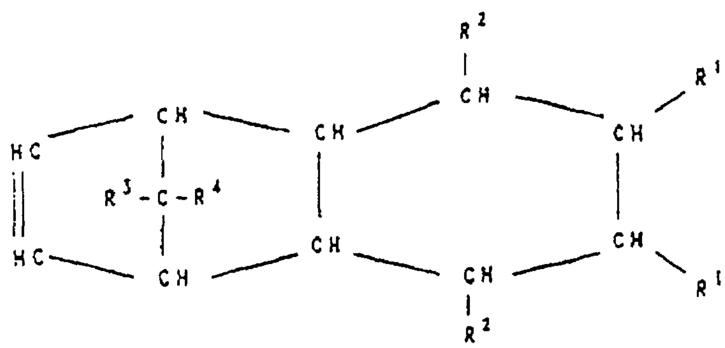

(V),

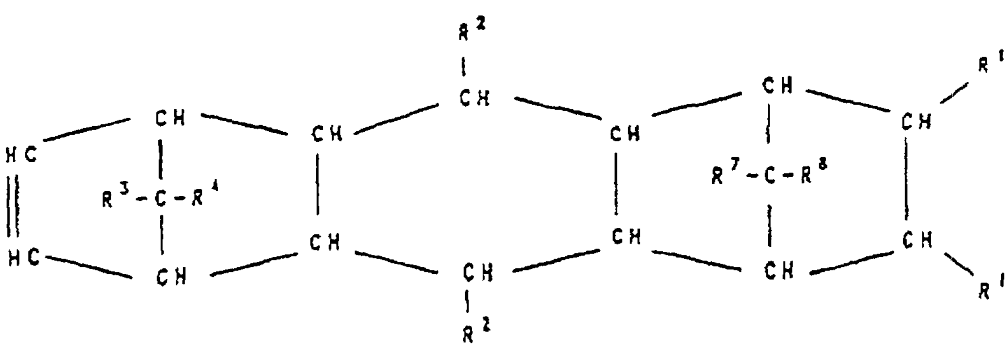

(VI),

worin die Reste $R^1$ bis $R^8$ der Formeln I bis VI gleich oder verschieden sein können und H, $C_6$-$C_{20}$-Aryl, $C_1$-$C_{20}$-Alkyl, F, Cl, Br, J bedeuten.

8. Polyolefin-Mehrschichtfolie nach einem der Ansprüche 1 bis 7, **dadurch gekennzeichnet, daß** die Teilchen aus amorphem cycloolefin polymer annähernd kugelförmig sind und der folgenden Bedingung genügen:

$$f = \sqrt{A/(\pi/4)}/D_{max}$$

worin f größer 0,5, vorzugsweise 0,7 bis 1, ist und A die Querschnittsfläche in $mm^2$ und $D_{max}$ den maximalen Durchmesser in mm der Querschnittsfläche bedeuten.

**9.** Polyolefin-Mehrschichtfolie nach einem der Ansprüche 1 bis 8, **dadurch gekennzeichnet, daß** die Deckschichten eine Dicke von 0,2 bis 2 μm aufweisen.

**10.** Verfahren zur Herstellung einer mehrschichtigen orientierten Polyolefinfolie, die in ihrer siegelfähigen Deckschicht enthaltend im wesentlichen siegelföhige Polymer aus α-Olefinen mit 2-10 Kohlenstoffatonen ein amorphes cycloolefin polymer enthält, bei welchem die die Folie bildenden Polymeren und/oder Polymermischungen in einem Extruder komprimiert und erwärmt werden, anschließend die Schmelze/n durch eine Flachdüse extrudiert werden, die so erhaltene Folie auf einer oder mehreren Walzen abgezogen wird, die Folie anschließend orientiert und gegebenenfalls thermofixiert und oberflächenbehandelt wird, **dadurch gekennzeichnet, daß** die Extrusionstemperatur des Deckschichtpolymeren über der Glastemperatur des amorphen cycloolefin polymeren liegt, und daß das amorphe Cycloolefin polymere ein Molekulargewicht im Bereich von 2.000 bis 180 000 aufweist.

**11.** Verfahren nach Anspruch 10 zur Herstellung der Polyolefin-Mehrschichtfolie, bei dem die coextrudierte Folie über eine Abzugswalze, deren Temperatur zwischen 20 und 90 °C liegt, abgezogen wird, die Folie biaxial gestreckt wird mit einem Längsstreckverhältnis von 4:1 bis 7:1 und einem Querstreckverhältnis von 7:1 bis 11:1, die biaxial gestreckte Folie thermofixiert, gegebenenfalls coronabehandelt und anschließend aufgewickelt wird.

**12.** Verwendung einer Polyolefin-Mehrschichtfolie nach einem oder mehreren der Ansprüche 1 bis 9 als Verpackungsfolie.

**13.** Verwendung einer Polyolefin-Mehrschichtfolie nach einem oder mehreren der Ansprüche 1 bis 9 zur Bedruckung und Kaschierung.

**14.** Verwendung eines amorphen cycloolefin polymeren mit einer Glastemperatur $T_G$ im Bereich von 70 bis 300 °C oder einer Vicat-Erweichungstemperatur von 70 bis 200 °C und mit einem Molekulargewicht im Bereich von 2.000 bis 180.000 als Antiblockmittel in orientierten Polyolefin-Mehrschichtfolien gemäß Anspruch 1.

**15.** Laminat, umfassend eine Polyolefin-Mehrschichtfolie nach einem oder mehreren der Ansprüche 1 bis 9 und Papier oder Pappe oder weitere Folie aus thermoplastischem Kunststoff.

## Claims

**1.** An oriented, multilayer polyolefin film comprising a polyolefinic base layer and at least one heat-sealable top layer essentially comprising heat-sealable polymers of α-olefins having 2 to 10 carbon atoms, wherein the heat-sealable top layer contains at least one amorphous cycloolefin polymer which is in the top layer in the form of separated particles and which has a molecular weight in the range from 2000 to 180,000.

**2.** A polyolefin film as claimed in claim 1, wherein the top layer contains a maximum of 5% by weight, preferably from 0.001 to 3% by weight, of amorphous cycloolefin polymer, based on the weight of the top layer.

**3.** A multilayer polyolefin film as claimed in claim 1 and/or 2, wherein the separated particles of amorphous cycloolefin polymer have a mean particle diameter of from 0.2 to 20 μm, preferably from 0.5 to 15 μm.

**4.** A polyolefin film as claimed in one or more of claims 1 to 3, wherein the amorphous cycloolefin polymer has a glass transition temperature $T_G$ in the range from 70 to 300°C or a Vicat softening temperature $T_V$ of from 70 to 200°C.

**5.** A polyolefin film as claimed in one or more of claims 1 to 4, wherein the amorphous cycloolefin polymer has a degree of crystallinity of less than 5% and a mean molecular weight $M_w$ of from 3000 to 150,000.

**6.** A polyolefin film as claimed in one or more of claims 1 to 5, wherein the amorphous cycloolefin polymer has a refractive index of from 1.3 to 1.7, and this refractive index is at most 0.1 unit greater than or less than the refractive index of the polyolefin.

7. A polyolefin film as claimed in one or more of claims 1 to 6, wherein the amorphous cycloolefin polymer is derived from at least one polycyclic olefin of the formulae I to VI

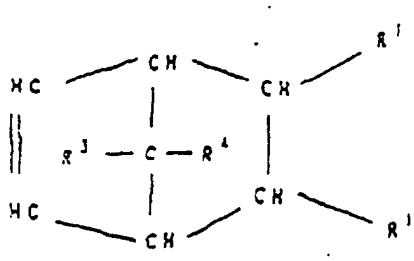

(I).

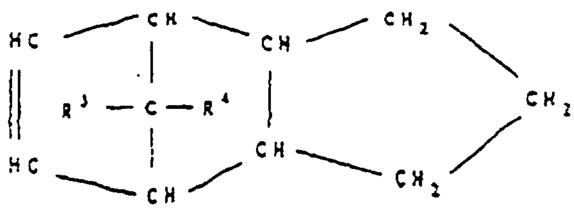

(II).

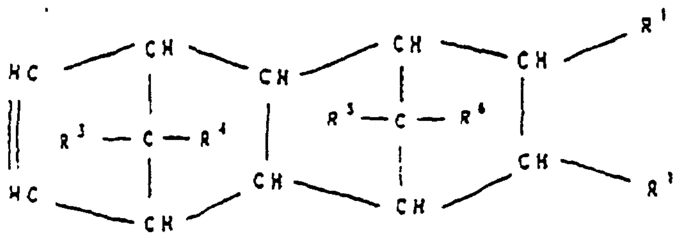

(III).

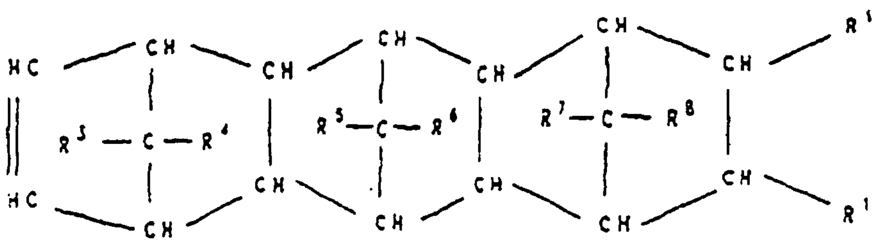

(IV).

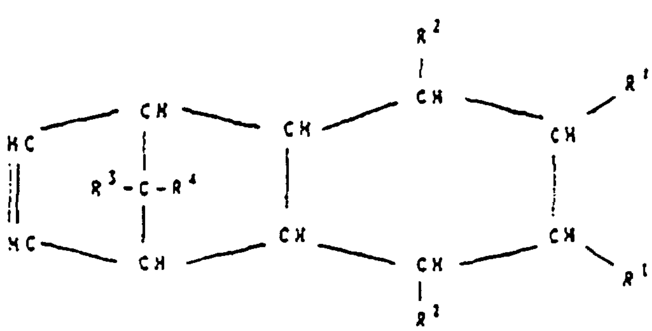

(V).

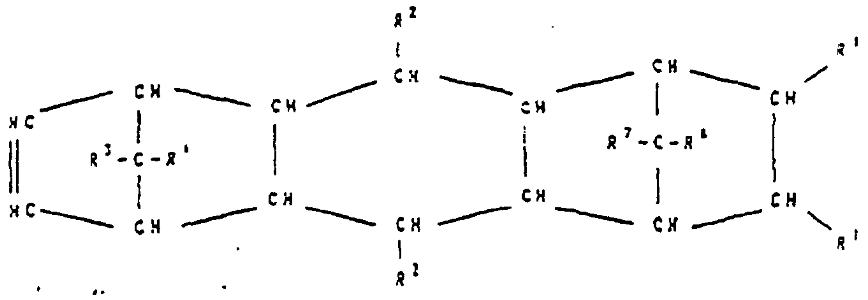

(VI),

in which the radicals $R^1$ to $R^8$ may be identical of different and are H, $C_6$-$C_{20}$-aryl, $C_1$-$C_{20}$-alkyl, F, Cl, Br or I.

**8.** A multilayer polyolefin film as claimed in one of claims 1 to 7, wherein the particles of amorphous cycloolefin polymer are approximately spherical and satisfy the following condition:

$$f = \sqrt{A/(\pi/4)}/D_{max}$$

in which f is greater than 0.5, preferably from 0.7 to 1, and A is the cross-sectional area in $mm^2$ and $D_{max}$ is the maximum diameter of the cross-sectional area in mm.

**9.** A multilayer polyolefin film as claimed in one of claims 1 to 8, wherein the top layer(s) has a thickness of from 0.2 to 2 $\mu$m.

**10.** A process for the production of a multilayer, oriented polyolefin film containing an amorphous cycloolefin polymer in its heat-sealable top layer essentially comprising heat-sealable polymers of $\alpha$-olefins having 2 to 10 carbon atoms, in which the polymers and/or polymer mixtures forming the film are compressed and warmed in an extruder, the melt(s) is (are) subsequently extruded through a flat-film die, the resultant film is taken off over one or more rolls, the film is subsequently oriented and, if desired, heat-set and surfacetreated, wherein the extrusion temperature of the top-layer polymer is above the glass transition temperature of the amorphous cycloolefin polymer, and wherein the amorphous cycloolefin polymer has a molecular weight in the range from 2000 to 180,000.

**11.** The process as claimed in claim 10 for the production of a multilayer polyolefin film, in which the coextruded film is taken off over a take-off roll whose temperature is from 20 to 90°C, the film is biaxially stretched at a longitudinal stretching ratio of from 4:1 to 7:1 and a transverse stretching ratio of from 7:1 to 11:1, and the biaxially stretched film is heat-set, if desired corona-treated and subsequently wound up.

**12.** The use of a multilayer polyolefin film as claimed in one or more of claims 1 to 9 as a packaging film.

**13.** The use of a multilayer polyolefin film as claimed in one or more of claims 1 to 9 for printing and lamination.

**14.** The use of an amorphous cycloolefin polymer having a glass transition temperature $T_G$ in the range from 70 to 300°C or a Vicat softening temperature of from 70 to 200°C and having a molecular weight in the range from 2000 to 180,000 as antiblocking agent in oriented multiplayer polyolefin films as claimed in claim 1.

**15.** A laminate comprising a multilayer polyolefin film as claimed in one or more of claims 1 to 9 and paper or board or a further film made from a thermoplastic.

**Revendications**

**1.** Film multicouche polyoléfinique orienté, comprenant une couche de base polyoléfinique et au moins une couche de recouvrement thermoscellable contenant essentiellement des polymères thermoscellables à base d'$\alpha$-oléfines ayant de 2 à 10 atomes de carbone, **caractérisé en ce que** la couche de recouvrement thermoscellable contient au moins un polymère cyclo-oléfinique amorphe qui, dans la couche de recouvrement, se trouve sous forme de particules séparées, et qui présente une masse moléculaire de 2 000 à 180 000.

2. Film polyoléfinique selon la revendication 1, **caractérisé en ce que** la couche de recouvrement contient au maximum 5 % en poids, de préférence, de 0,001 à 3 % en poids, de polymère cyclo-oléfinique amorphe, par rapport au poids de la couche de recouvrement.

3. Film multicouche polyoléfinique selon la revendication 1 et/ou la revendication 2, **caractérisé en ce que** les particules séparées constituées de polymère cyclo-oléfinique amorphe ont un diamètre moyen de particule de 0,2 à 20 µm, de préférence, de 0,5 à 15 µm.

4. Film polyoléfinique selon une ou plusieurs des revendications 1 à 3, **caractérisé en ce que** le polymère cyclo-oléfinique amorphe a une température de transition vitreuse $T_G$ dans la plage de 70 à 300°C ou une température de ramollissement Vicat $T_V$ de 70 à 200°C.

5. Film polyoléfinique selon une ou plusieurs des revendications 1 à 4, **caractérisé en ce que** le polymère cyclo-oléfinique amorphe a un degré de cristallinité inférieur à 5 % et une masse moléculaire moyenne $M_w$ de 3 000 à 150 000.

6. Film polyoléfinique selon une ou plusieurs des revendications 1 à 5, **caractérisé en ce que** le polymère cyclo-oléfinique amorphe a un indice de réfraction de 1,3 à 1,7 et cet indice de réfraction est au maximum de 0,1 unité supérieur ou inférieur à l'indice de réfraction de la polyoléfine.

7. Film polyoléfinique selon une ou plusieurs des revendications 1 à 6, **caractérisé en ce que** le polymère cyclo-oléfinique amorphe est dérivé d'au moins une oléfine polycyclique de formules I à VI

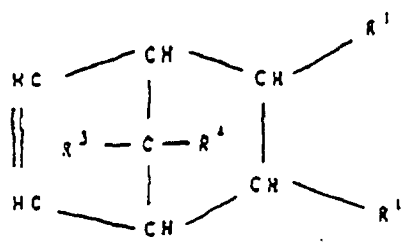

(I).

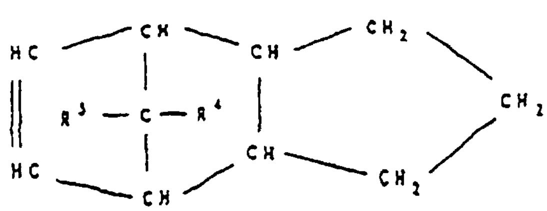

(II).

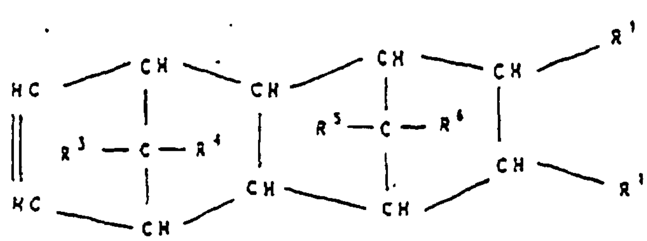

(III).

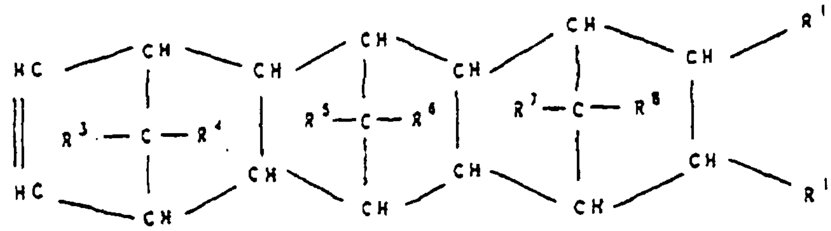

(IV),

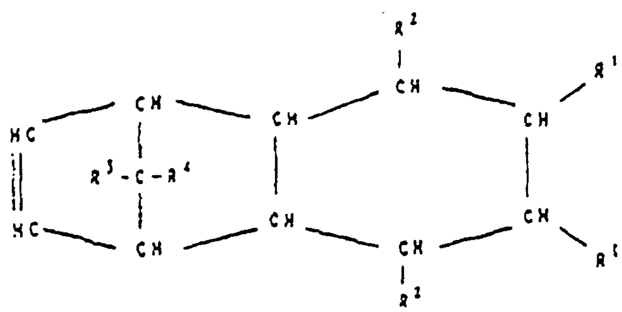

(V).

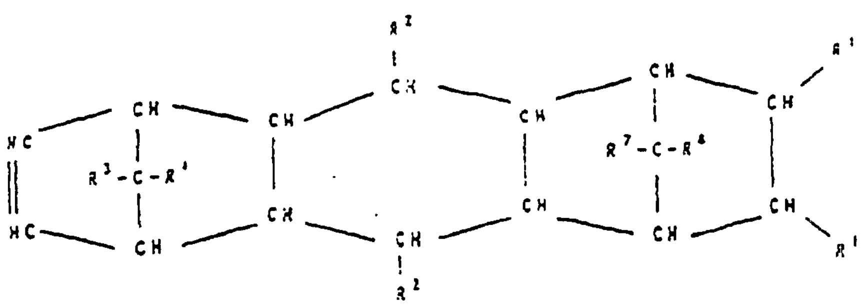

(VI),

où les radicaux $R^1$ à $R^8$ des formules I à VI peuvent être identiques ou différents, et représentent H, un groupe aryle en $C_6$-$C_{20}$, alkyle en $C_1$-$C_{20}$, F, Cl, Br, I.

**8.** Film multicouche polyoléfinique selon l'une quelconque des revendications 1 à 7, **caractérisé en ce que** les particules de polymère cyclo-oléfinique amorphe sont approximativement sphériques et satisfont à la condition suivante :

$$f = \sqrt{A/(\pi/4)/D_{max}}$$

dans laquelle f est supérieur à 0,5, de préférence, va de 0,7 à 1, et A représente l'aire de la section transversale en $mm^2$, et $D_{max}$ représente le diamètre maximum en mm de l'aire de la section transversale.

**9.** Film multicouche polyoléfinique selon l'une quelconque des revendications 1 à 8, **caractérisé en ce que** les couches de revêtement ont une épaisseur de 0,1 à 2 µm.

**10.** Procédé pour la fabrication d'un film polyoléfinique multicouche orienté qui contient un polymère cyclo-oléfinique amorphe dans sa couche de recouvrement thermoscellable contenant essentiellement des polymères thermoscellables à base d'α-oléfines ayant de 2 à 10 atomes de carbone, dans lequel les polymères et/ou mélanges de polymères constituant le film sont comprimés et chauffés dans une extrudeuse, ensuite la (les) masse(s) fondue(s) est(sont) extrudée(s) à travers une filière plate, le film ainsi obtenu est reçu sur un ou plusieurs cylindres, le film est ensuite orienté et éventuellement thermofixé et traité en surface, **caractérisé en ce que** la température d'extrusion du polymère de la couche de recouvrement est supérieure à la température de transition vitreuse du

polymère cyclo-oléfinique amorphe, et **en ce que** le polymère cyclo-oléfinique amorphe présente une masse moléculaire dans la plage de 2 000 à 180 000.

**11.** Procédé selon la revendication 10, pour la fabrication du film multicouche polyoléfinique, dans lequel le film coextrudé est reçu sur un cylindre récepteur dont la température est comprise entre 20 et 90°C, le film est étiré biaxialement à un rapport d'étirage longitudinal allant de 4:1 à 7:1 et un rapport d'étirage transversal allant de 7:1 à 11:1, le film étiré biaxialement est thermofixé, éventuellement traité par effet couronne et ensuite enroulé.

**12.** Utilisation d'un film multicouche polyoléfinique selon une ou plusieurs des revendications 1 à 9, en tant que film d'emballage.

**13.** Utilisation d'un film multicouche polyoléfinique selon une ou plusieurs des revendications 1 à 9, pour l'impression et le contrecollage.

**14.** Utilisation d'un polymère cyclo-oléfinique amorphe ayant une température de transition vitreuse $T_G$ dans la plage de 70 à 300°C ou une température de ramollissement Vicat de 70 à 200°C et une masse moléculaire dans la plage de 2 000 à 180 000, en tant qu'agent anti-adhérence de contact dans des films multicouches polyoléfiniques orientés, selon la revendication 1.

**15.** Stratifié comprenant un film multicouche polyoléfinique selon une ou plusieurs des revendications 1 à 9, et du papier ou du carton ou un autre film de matière synthétique thermoplastique.